**Europäisches Patentamt**

**European Patent Office**

**Office européen des brevets**

(19)

(11) Veröffentlichungsnummer: **0 088 042**
**B1**

(12)

# EUROPÄISCHE PATENTSCHRIFT

(45) Veröffentlichungstag der Patentschrift:
**14.05.86**

(21) Anmeldenummer: **83730017.7**

(22) Anmeldetag: **15.02.83**

(51) Int. Cl.⁴: **B 65 G 17/24,** B 65 G 21/20,
B 65 G 47/26

(54) **Reversierbarer Staukettenschlepper für langgestrecktes Gut.**

(30) Priorität: **19.02.82 DE 3206576**

(43) Veröffentlichungstag der Anmeldung:
**07.09.83 Patentblatt 83/36**

(45) Bekanntmachung des Hinweises auf die Patenterteilung:
**14.05.86 Patentblatt 86/20**

(84) Benannte Vertragsstaaten:
**BE FR GB IT SE**

(56) Entgegenhaltungen:
**CH - A - 521 273**
**DE - A - 1 527 709**
**DE - A - 3 003 180**
**DE - U - 7 921 207**
**FR - A - 1 565 677**
**US - A - 3 536 185**

(73) Patentinhaber: **MANNESMANN Aktiengesellschaft,
Mannesmannufer 2, D-4000 Düsseldorf 1 (DE)**

(72) Erfinder: **Boos, Jürgen, Dipl. Ing., Am Schneisbroich 7,
D-4000 Düsseldorf 30 (DE)**
Erfinder: **Homersen, Achim, Potsdamer Strasse 49,
D-4000 Düsseldorf 13 (DE)**
Erfinder: **Schirmag, Klaus-Peter, Ing. grd., Dachsweg 2,
D-4030 Ratingen 4 (DE)**

(74) Vertreter: **Meissner, Peter E., Dipl.-Ing. et al,
Herbertstrasse 22, D-1000 Berlin 33 (DE)**

## Beschreibung

Die Erfindung betrifft einen Staukettenschlepper für langgestrecktes Gut, insbesondere Rohre, gemäss dem Oberbegriff des Patentanspruchs.

Aus der DE-A-3003180 ist ein derartiger Staukettenschlepper bekannt mit gegenüberliegenden Umlenkrädern, die üblicherweise mit einer Spanneinrichtung versehen sind. Derartige Spanneinrichtungen sind auch bei vergleichbaren Fördereinrichtungen bekannt, die ein endloses umlaufendes Förderorgan, bspw. eine Kette, aufweisen. (Hierzu sei die CH-A-521273 und das DE-U-7921207 erwähnt).

Bei den bekannten Staukettenschleppern ist von Nachteil, dass die Kettenzugkraft durch die Spanneinrichtung zwangsweise erhöht wird. Die Anordnungen der Antriebseinrichtung im Bereich der Übergabevorrichtung erschwert den Einsatz von rotierenden Übergaben. Ein nahtloser Übergang zwischen Kettenrad und Kettenunterstützung ist nicht möglich, so dass die Staulänge für das Transportgut verkürzt wird. Beim Nachspannen der Kette ändert sich der Achsabstand der Kettenräder.

Aufgabe der Erfindung ist es, einen Staukettenschlepper für langgestrecktes Gut, insbesondere Rohre, zu schaffen, bei dem keine Notwendigkeit der Anwendung einer Spanneinrichtung besteht und die reversierbar zu betreiben ist.

Zur Lösung dieser Aufgabe wird ein Staukettenschlepper, insbesondere für Rohre vorgeschlagen, bei dem das reversierbar antreibende Kettenrad unterhalb des Untertrums angeordnet ist und dass vor und hinter dem Kettenrad schwenkbare Kettenführungen vorgesehen sind, die den Trum in Bewegungsrichtung etwa tangential in den Scheitelbereich des Kettenrades führen bzw. vom Bodenbereich des Kettenrades unterstützend abführen.

———

Mit dem erfindungsgemässen Staukettenschlepper wird die Übergabe des Transportgutes durch rotierende Übergabeeinrichtungen an beiden Enden des Staukettenförderers ermöglicht. Die durch die unterschiedlichen Gewichte und/oder Durchmesser des Transportgutes verursachte Eindringtiefe in die Transportrollen wird wirkungsvoll begrenzt und die Standzeit der Rollen hierdurch erhöht. Die Transport- und Stützrollen der Staukette können ohne grössere Schwierigkeit ausgewechselt werden. Die endlos umlaufende Staukette, die auf den Unterstützungsbahnen rollt, kann an den Enden der Staustrecke lückenlos über Umlenkbahnen umgelenkt werden.

Ausserdem wird durch die Verringerung der Bewegung des Transportgutes zueinander während des Transportes eine wirksame Lärmminderung erzielt.

Die Gesamtlänge der Anlage ist konstant. Dadurch bleibt der Abstand zu angrenzenden Bauteilen, z.B. rotierende Übergabe an den Stauenden unverändert.

In den beigefügten Zeichnungen ist eine mögliche Ausführungsform eines erfindungsgemässen reversierbaren Staukettenschleppers schematisch dargestellt.

Es zeigen:

Fig.1 eine Gesamtübersicht eines Stauförderers mit vier nebeneinander angeordneten Stauketteneinheiten.

Fig.2 einen Längsschnitt durch eine Stauketteneinheit

Fig.3 einen Längsschnitt wie Figur 2, jedoch mit reversierter Transportrichtung

Fig.4 ein Querschnitt durch eine Stauketteneinheit in vergrössertem Massstab

Fig.5 ein Teil der Staurollenketten in vergrössertem Massstab.

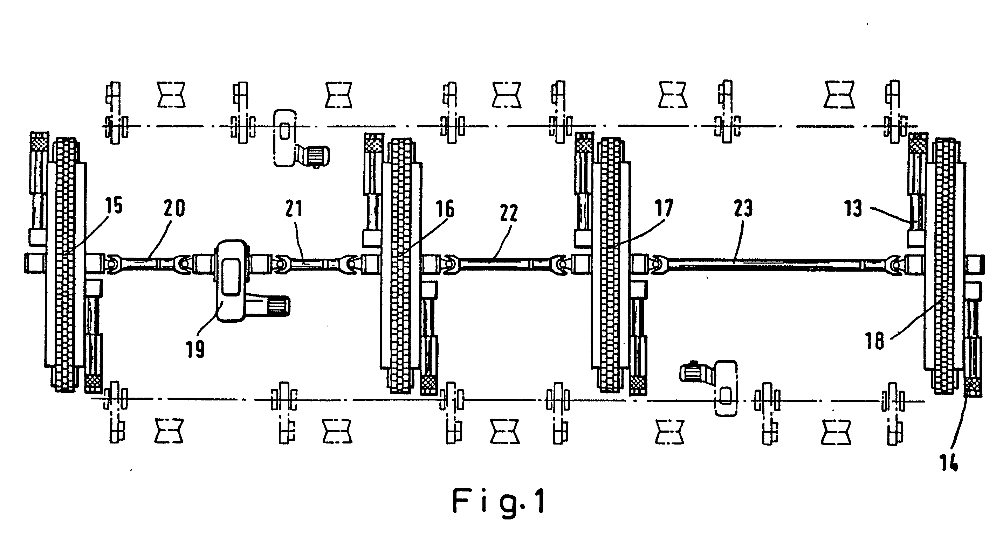

Die in Figur 1 dargestellte Gesamtübersicht zeigt vier nebeneinander angeordnete Stauketteneinheiten 15 bis 18, den zentralen Antrieb 19 und die Antriebswellen 20 bis 23.

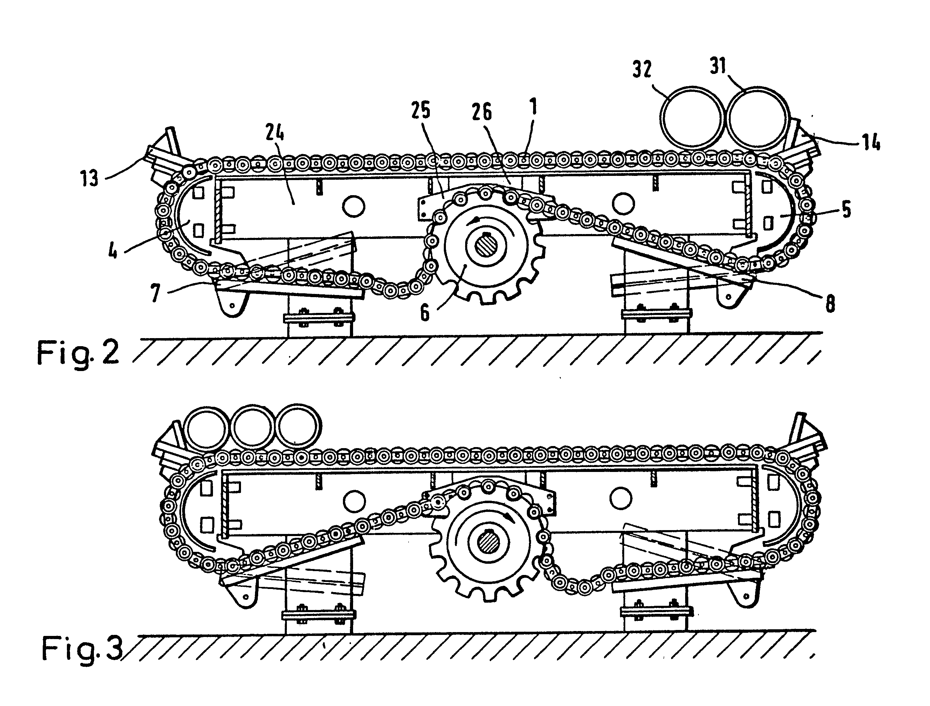

Die Figuren 2 und 3 zeigen einen Längsschnitt durch eine Stauketteneinheit 15 bis 18, mit dem Maschinenständer 24, den Umlenkbahnen 4 und 5, für die Kette 1, den Anschlägen 13 und 14 und den in Transportrichtung angestauten Rohren 31 und 32.

Zwischen den Umlenkbahnen 4 und 5 ist das reversierbar antreibbare Kettenrad 6 und die je nach Förderrichtung winkelverstellbaren Führungen 7 und 8 für das Leertrum angeordnet. Im Bereich des Kettenrades 6 sind Kettenführungen 25 und 26 vorgesehen.

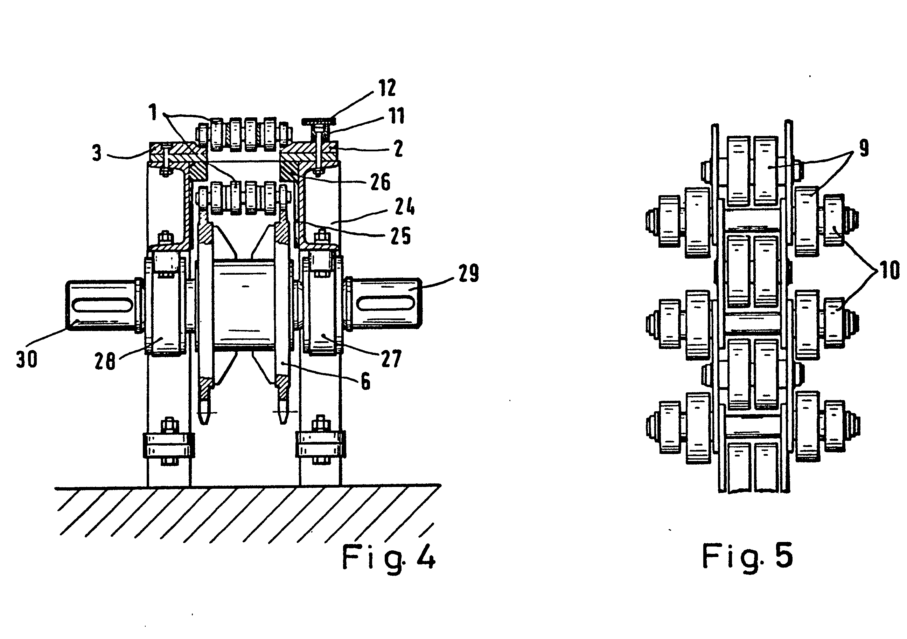

Der in Figur 4 in vergrössertem Massstab dargestellte Querschnitt zeigt die auf dem Maschinenständer 24 angebrachten Unterstützungsbahnen 2 und 3 der mit Kunststoffbelag 12 versehenen Führungsleiste 11; ferner das Kettenrad 6, die Kettenradlager 27 und 28, die Wellenenden 29 und 30 zum Antrieb des Kettenrades 6 und die Kettenführung 25 und 26 im Bereich des Kettenrades 6 und der Kette 1.

Das in Figur 5 in vergrössertem Massstab gezeigte Teil der Staukette 1 stellt die paarweise Versetzung der Tragrollen 9 und der Stützrollen 10 dar. Die Stützrollen 10 befinden sich nur an jedem zweiten ausserhalb der Kette 1 angeordneten Tragrollenpaar. Durch diese Anordnung ist ein Austausch der Rollen möglich, ohne dass die Kette 1 demontiert werden muss, d.h. die aussen liegenden Rollen 9 und 10 können abgenommen werden, während der Bolzen in der Kette 1 verbleibt. Die innerhalb der Kette 1 angeordneten Tragrollen 9 können durch Herausnahme ihres Bolzens gewechselt werden.

## Patentanspruch

Staukettenschlepper für langgestrecktes Gut, insbesondere Rohre, mit ein oder mehreren nebeneinander angeordneten, endlosen und über feststehende Umlenkbahnen geführten Ketten mit Rollen, die, soweit sie sich jeweils im Obertrum befinden, auf Unterstützungsbahnen aufliegen und mit einem antreibenden Kettenrad, das mit dem Untertrum in Eingriff steht, dadurch gekennzeichnet, dass das reversierbar antreibende Kettenrad (6), unterhalb des Untertrums angeordnet ist und dass vor und hinter dem Kettenrad (6) schwenkbare Kettenführungen (7, 8) vorgesehen sind, die den Trum in Bewegungsrichtung etwa tangential in den Scheitelbereich des Kettenrades führen bzw. vom Bodenbereich des Kettenrades unterstützend abführen.

## Claim

A chain conveyor for elongate goods, in particular pipes, comprising one or more consecutively arranged, endless chains having rollers which are guided over stationary guide tracks and which, when present in the upper track section, rest on supporting tracks, and a driving chain wheel which engages with the lower track section, characterised in that the reversible driving chain wheel (6) is arranged below the lower track section and that pivotable chain guides (7, 8), are arranged before and after the chain wheel (6), and guide the run in the direction of movement approximately tangentially to the top region of the chain wheel and away from the bottom region of the chain wheel in a supporting manner.

## Revendication

Convoyeur-accumulateur à chaînes pour produits allongés, en particulier des tubes, comportant une ou plusieurs chaînes à galets, sans fin, disposées côte à côte et guidées par des voies de renversement fixes, qui, aussi longtemps qu'elles se trouvent, à chaque fois, sur le brin supérieur, reposent sur des voies d'appui, et une roue dentée d'entraînement qui engrène avec le brin inférieur, caractérisé en ce que la roue dentée (6), entraînant de façon réversible, est disposée en dessous du brin inférieur et en ce que des guides de chaîne pouvant pivoter (7, 8) sont prévus en avant et en arrière de la roue dentée (6), qui guident le brin dans la direction de déplacement à peu près tangentiellement dans la zone du sommet de la roue dentée ou l'emmènent de la zone inférieure de la roue dentée en l'entraînant.

Fig.1

Fig.2

Fig.3

Fig. 4

Fig. 5

0088042